Europäisches Patentamt

European Patent Office

Office européen des brevets

(19)

(11) Veröffentlichungsnummer: **0 158 044**
**B1**

(12) # EUROPÄISCHE PATENTSCHRIFT

(45) Veröffentlichungstag der Patentschrift:
**10.06.87**

(51) Int. Cl.⁴: **B 62 D 25/12**, B 62 D 35/00

(21) Anmeldenummer: **85101653.5**

(22) Anmeldetag: **15.02.85**

(54) **Heckklappe für Fahrzeuge mit einem Stufenheck.**

(30) Priorität: **07.04.84 DE 3413187**

(43) Veröffentlichungstag der Anmeldung:
**16.10.85 Patentblatt 85/42**

(45) Bekanntmachung des Hinweises auf die Patenterteilung:
**10.06.87 Patentblatt 87/24**

(84) Benannte Vertragsstaaten:
**DE FR GB IT**

(56) Entgegenhaltungen:
**DE-A-1 067 324**
**FR-A-1 292 158**
**US-A-4 219 230**

(73) Patentinhaber: **AUDI AG, Postfach 220, D-8070 Ingolstadt (DE)**

(72) Erfinder: **Hasler, Franz, Am Hasel 3, D-8071 Wettstetten (DE)**
Erfinder: **Rodriguez, Humberto, Rudolf- Heine-Strasse 18, D-8070 Ingolstadt (DE)**
Erfinder: **Rückheim, Winfried, Sandbreite 5a, D-8074 Gaimersheim (DE)**

(74) Vertreter: **Le Vrang, Klaus, AUDI AG Postfach 220 Patentabteilung, D-8070 Ingolstadt (DE)**

## Beschreibung

Die Erfindung bezieht sich auf eine Heckklappe für Fahrzeuge mit einem Stufenheck und einer gekrümmten Heckscheibe gemäß dem Oberbegriff des Patentanspruchs 1.

Ein gattungsgemäßes Fahrzeug ist aus der FR-A-1 292 158 bekannt. Bei diesem Fahrzeug ist die Heckklappe mit einem angestellten Rand versehen, welcher im Abstand zu einer relativ steil stehenden Heckscheibe verläuft,

Aus aerodynamischen Gründen werden Personenkraftwagen zunehmend mit einer stark gewölbten und stark geneigten Heckscheibe versehen, an deren Kontur sich die vordere Kante der Heckklappe orientiert. Dies führt zum einen dazu, daß die beiden vorderen Ecken der Heckklappe stark spitzwinkelig zulaufen und - bedingt durch die starke Neigung der Heckscheibe - sich eine sehr kurze Heckklappe ergibt, wodurch zwangsläufig die Ladeöffnung reduziert wird.

Die langen und sehr spitzen vorderen Ecken der Heckklappe sind sehr schwer oder mit herkömmlichen Methoden überhaupt nicht herstellbar. Außerdem erfordern sie extrem große Ankerscharniere, womit wiederum eine Einschränkung des Kofferraums verbunden ist.

Der vorliegenden Erfindung liegt die Aufgabe zugrunde, mit einfachen Mitteln die Ladeöffnung eines Fahrzeuges mit Stufenheck zu vergrößern und gleichzeitig die Voraussetzung für die Verwendung platzsparender Scharniere zu schaffen.

Die Aufgabe wird mit den kennzeichnenden Merkmalen des Anspruchs 1 gelöst.

Dadurch, daß der vordere Randbereich der Heckklappe nach oben angestellt ist, wird die Ladeöffnung etwa um diesen Betrag vergrößert. Die Heckklappenfuge wird von der bekannten Anordnung in der Ecke zwischen Heckscheibe und Heckklappenfläche in die Ebene der Heckscheibe verlegt. Durch den flächenbündigen Anschluß der Heckklappe an die Heckscheibe wird ohne ein zusätzliches Teil ein aerodynamischer vorteilhafter glattflächiger Anschluß zwischen einem bewegten und einem festen Bauteil geschaffen. Die Glattflächigkeit zwischen beiden Bauteilen und der Krümmungsradius des angestellten Randbereiches bewirken eine kontinuierliche Strömungsumlenkung, wodurch analog zu flächenbündigen, außenliegenden Seitenscheiben nunmehr auch der Heckbereich strömungstechnisch optimiert wird.

Durch die erfindungsgemäße Heckklappe werden also die aerodynamischen Verhältnisse verbessert, der Gebrauchswert der Karosserie (durch Vergrößerung der Ladeöffnung) erhöht, die Herstellung der Heckklappe durch "Entschärfung" der vorderen Ecken vereinfacht und außerdem noch die Voraussetzung für platzsparendere Heckklappenscharniere geschaffen.

Es sind zwar Frontklappen mit einem angestellten Randbereich bekannt, bei denen der ausgestellte Randbereich zur Frontscheibe versetzt verläuft, so daß zwischen beiden Bauteilen die Scheibenwischer hindurchtreten können. Durch diese Ausbildung wird weder die Öffnungsbreite der Frontklappe vergrößert, noch bringt dort das Anstellen des Randbereichs aerodynamische Vorteile, da durch den Versatz eine Volumenänderung bzw. eine Strömungstörung auftritt.

Besonders vorteilhaft ist, wenn der angestellte Randbereich bis in Höhe einer Verbindungslinie zwischen dem Auge eines Fahrzeuglenkers und der Heckkante der Heckklappe reicht. Dadurch werden die Ladeverhältnisse wesentlich verbessert, ohne das die Sicht nach hinten auf den Fahrzeugabschluß beeinträchtigt wird.

Vornehmlich aus optischen Gründen kann es zweckmäßig sein, wenn der angestellte Randbereich in der farblichen Erscheinung derjenigen der Heckscheibe angepaßt ist. Dies kann beispielsweise durch das Aufbringen einer entsprechenden Folie oder Lackierung erfolgen.

Um einen möglichst geringen Einfluß auf die Strömung auszuüben, wird man den Heckklappenspalt im Rahmen der möglichen Toleranzen möglichst eng ausführen. Wird eine Dichtung am Ende des vorderen Randbereichs der Heckklappe verwendet, dann ist es zweckmäßig, wenn diese so augebildet wird, daß sie zumindest teilweise die Fuge zwischen der Heckklappe und der Heckscheibe ausfüllt.

Ein Ausführungsbeispiel der Erfindung ist in der Zeichnung dargestellt und wird nachfolgend näher beschrieben. Es zeigt

Fig. 1 in perspektivischer Darstellung die Heckansicht eines Personenkraftwagens mit einem Stufenheck,

Fig. 2 das Fahrzeug aus Fig. 1 schematisch in Seitenansicht und

Fig. 3 den Schnitt III-III aus Fig. 1.

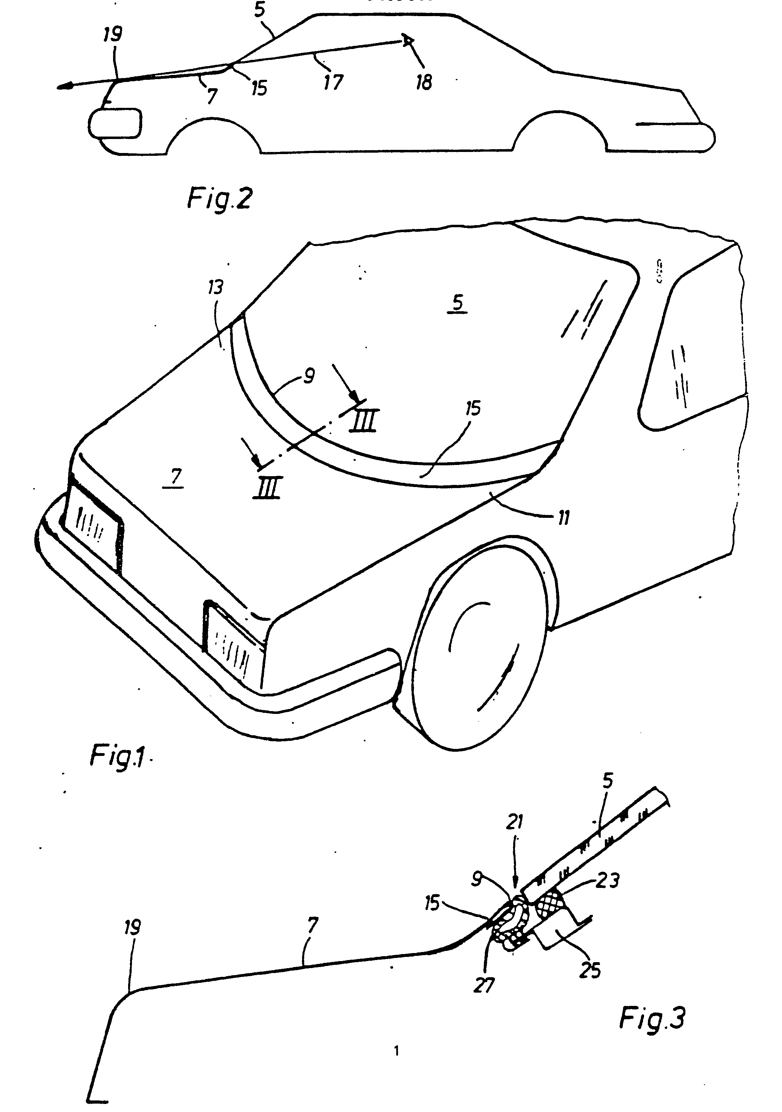

An die Heckscheibe 5 eines in Fig. 1 dargestellten Personenkraftwagens schließt sich eine Heckklappe 7 an, deren vorderer Rand 9 der stark gewölbten Heckscheibe 5 folgt. Die starke Wölbung der Heckscheibe 5 hat zur Folge, daß die vorderen Ecken 11 und 13 relativ spitzwinkelig ausgeführt sein müssen.

Besonderes Merkmal der Heckklappe 7 ist der Umstand, daß ihr vorderer Randbereich 15 nach oben angestellt ist. Dadurch schließt sich an die Ecken 11 und 13 ein sich nach oben erstreckender, trapezförmiger Abschnitt an, wodurch die Ecken entschärft und leichter herstellbar werden.

Wie aus Fig. 2 unmittelbar ersichtlich, verläuft der vordere Randbereich 15 bis in Höhe einer Verbindungslinie 17 zwischen dem mit 18 gekennzeichneten Auge eines Fahrzeuglenkers und der Heckkante 19 der Heckklappe 7, so daß die Sicht auf den Fahrzeugabschluß durch den angestellten vorderen Randbereich 15 nicht beeinträchtigt wird.

Die Fig. 3 zeigt den zur Strömungsoptimierung glattflächigen Übergangsbereich von der Heckscheibe 5 auf die Heckklappe 7. Der Anschluß der beweglichen Heckklappe 7 an die fixierte Heckscheibe 5 erfolgt in einer Ebene, in welcher sich auch die mit 21 bezeichnete Heckklappenfuge befindet. Die Heckscheibe 5 ist mittels eines Klebers 23 an einem Querträger 25 befestigt, welcher auch eine Dichtung 27 für die Heckklappe 7 aufnimmt. Die als Hohlkörper ausgebildete Dichtung 27 ist so gestaltet, daß ein Abschnitt in die Heckklappenfuge 21 ragt und diese teilweise ausfüllt.

## Patentansprüche

1. Heckklappe für Fahrzeuge mit einem Stufenheck und einer gekrümmten Heckscheibe, wobei der vordere Rand der Heckklappe nach oben angestellt ist und zentrisch der Kontur der Heckscheibe folgt und wobei die vorderen Ecken der Heckklappe stark spitzwinkelig zulaufen, dadurch gekennzeichnet, daß zur Vergrößerung der Ladeöffnung der angestellte Randbereich (15) der Heckklappe (7) in der durch die Heckscheibe (5) festgelegten Fläche verlauft, und daß ein die Heckscheibe (5) tragender und eine Dichtung (27) für die Heckscheibe (7) aufnehmender Querträger (25) innerhalb der senkrechten Projektion der durch die Heckscheibe (5) und den angestellten Randbereich (15) der Heckklappe (7) bestimmten Fläche liegt.

2. Heckklappe nach Anspruch 1, dadurch gekennzeichnet, daß die Dichtung (27) den Spalt (21) zwischen der Heckschiebe (5) und dem vorderen Rand (9) der Heckklappe (7) ausfüllt.

3. Heckklappe nach Anspruch 1 oder 2, dadurch gekennzeichnet, daß der angestellte Randbereich (15) durch Aufbringen einer Folie oder durch eine entsprechende Lackierung der farblichen Erscheinung derjenigen der Heckschiebe (5) angepaßt ist.

## Claims

1. Rear or boot lid for vehicles having a stepped-down rear end and a curved rear window, the forward edge of the boot lid being angled upwardly and following the contour of the rear window concentrically, and the forward corners of the boot lid narrowing sharply in acute-angled form, characterised in that to increase the size of the luggage boot opening the angled edge region (15) of the boot lid (7) is situated in the plane formed by the rear window (5), and that a transverse bearer (25) which supports the rear window (5) and accommodates a sealing element (27) for the rear window (7) is situated within the vertical projection of the plane defined by the rear window (5) and the angled edge region (15) of the boot lid (7).

2. Boot lid according to claim 1, characterised in that the sealing element (27) fills the gap (21) between the rear window (5) and the forward edge (9) of the boot lid (7).

3. Boot lid according to claim 1 or 2, characterised in that the angled edge region (15) is adapted in its appearance, as regards colour, to the appearance of the rear window (5) by the fitting of a foil or by suitable paintwork.

## Revendications

1. Hayon pour véhicule automobile comportant un arrière étagé et une lunette arrière courbe, le bord antérieur du hayon étant relevé vers le haut et suivant concentriquement le contour de la lunette arrière et les angles antérieurs du hayon formant des angles très aigus, caractérisé en ce qu'afin d'agrandir l'ouverture de chargement, la partie bordante relevée (15) du rayon (7) s'étend dans la surface definie par la lunette arrière (5) et en ce qu'une traverse (25), qui porte la lunette arrière (5) et qui reçoit un joint d'étanchéité (27) pour le hayon (7), se trouve dans la projection verticale de la surface définie par la lunette arrière (5) et la partie bordante relevée (15) du hayon (7).

2. Hayon selon la revendication 1, caractérisé en ce que le joint d'étanchéité (27) remplit la fente (21) entre la lunette arrière (5) et le bord antérieur (9) du hayon (7).

3. Hayon selon la revendication 1 ou 2, caractérisé en ce que par application d'une feuille mince ou par une peinture correspondante, la partie bordante relevée (15) est adaptée, dans son aspect de couleur, à celui de la lunette arrière (5).

0 158 044

Fig.2

Fig.1

Fig.3